# EUROPÄISCHE PATENTANMELDUNG

(11) **EP 1 063 718 A2**
(43) Veröffentlichungstag der Anmeldung: **27.12.2000**
(21) Anmeldenummer: 00250190.6
(22) Anmeldetag: 20.06.2000
(51) Int. Cl.: H01M 8/04

(54) **Vorrichtung zum Auskondensieren von Flüssigkeit aus einem Gasstrom sowie Brennstoffzellensystem**

(30) Priorität: 23.06.1999 DE 19929550
(71) Anmelder: MANNESMANN Aktiengesellschaft, 40213 Düsseldorf (DE)
(72) Erfinder: Herdeg, Wolfgang, Dr. rer. nat., 72141 Walddorfhäslach (DE)
(74) Vertreter: Meissner, Peter E., Dipl.-Ing.

(57) **Zusammenfassung**

Es wird ein Brennstoffzellensystem mit einer Vorrichtung (10) zum Auskondensieren von Wasser aus dem Abgasstrom der Brennstoffzelle beschrieben. Die Vorrichtung (10) weist wenigstens ein erstes Kondensatorelement (20) auf, das eine Anzahl von Strömungswegen (23) für den Abgasstrom aufweist. Weiterhin ist ein zweites Kondensatorelement (30) vorgesehen, das eine Anzahl von Strömungswegen (33) für ein Kühlmedium aufweist. Die Kondensatorelemente (20, 30) sind derart benachbart zueinander angeordnet, daß ein thermischer Austausch zwischen dem die Strömungswege (23) durchströmenden Abgasstrom und dem die Strömungswege (33) durchströmenden Kühlmedium stattfindet oder stattfinden kann. Zur Gewährleistung eines besonders intensiven Wärmeaustauschs sind die Kondensatorelemente (20, 30) in Mikrostrukturtechnik ausgebildet. Dieses Brennstoffzellensystem ist besonders geeignet für den Einsatz in Fahrzeugen.

## Beschreibung

Die vorliegende Erfindung betrifft ein Brennstoffzellensystem mit mindestens einer Brennstoffzelle, das wenigstens eine Zuleitung und eine Ableitung für einen Brennstoff sowie wenigstens eine Zuleitung und eine Ableitung für ein Oxidationsmittel aufweist.

Brennstoffzellen sind bereits seit langem bekannt und haben insbesondere im Bereich der Automobilindustrie in den letzten Jahren erheblich an Bedeutung gewonnen.

Ähnlich wie Batteriesysteme erzeugen Brennstoffzellen elektrische Energie auf chemischem Wege. Dabei werden aber die einzelnen Reaktanten kontinuierlich zugeführt und das Reaktionsprodukt kontinuierlich abgeführt. Den Brennstoffzellen liegt das Funktionsprinzip zugrunde, daß sich elektrisch neutrale Moleküle oder Atome miteinander verbinden und dabei Elektronen austauschen. Dieser Vorgang wird als Redoxprozeß bezeichnet. Bei der Brennstoffzelle werden die Oxidations- und Reduktionsprozesse räumlich voneinander getrennt. Die bei der Reduktion abgegebenen Elektronen lassen sich als elektrischer Strom durch einen Verbraucher leiten, beispielsweise den Elektromotor eines Fahrzeugs.

Brennstoffzellensysteme weisen im allgemeinen eine Vielzahl elementarer Brennstoffzellen auf, die zu einem Stapel (stack) zusammengeschaltet sind. Daher soll im folgenden vereinfachend unter dem Begriff Brennstoffzelle sowohl eine einzelne als auch eine Vielzahl von Brennstoffzellen eines Brennstoffzellensystems verstanden werden.

Als gasförmige Reaktionspartner für die Brennstoffzelle werden beispielsweise Wasserstoff als Brennstoff und Sauerstoff als Oxidationsmittel verwendet. Will man die Brennstoffzellen mit einem leicht verfügbaren und zu speichernden Brennstoff wie Erdgas oder Methanol betreiben, muß man den jeweiligen Kohlenwasserstoff zunächst in ein wasserstoffreiches Gas umwandeln, was beispielsweise mittels Reformierung geschehen kann. Bei der Umwandlung des Brennstoffs innerhalb der entsprechenden Reaktoren wird Wasser benötigt, das bisher aus einer separaten Wasserquelle zugeführt werden muß.

Bei der Erzeugung von Strom und Wärme in der Brennstoffzelle aus dem Brennstoff (beispielsweise Wasserstoff) und einem Oxidationsmittel (beispielsweise Sauerstoff) entsteht bei den entsprechenden Reaktionen Wasser in der Brennstoffzelle. Dieses Wasser wird in zumeist dampfförmigem Zustand aus der Brennstoffzelle abgeleitet und in die Umgebung abgegeben.

Aus der EP 0 391 895 B1 ist ein Verfahren zur Herstellung von Feinstrukturkörpern mit hoher Formgenauigkeit bekannt. Mit diesem Verfahren lassen sich beispielsweise Wärmetauscher herstellen, deren Strömungskanäle für die Wärmetauschmedien charakteristische Querabmessungen (Durchmesser bzw. Höhe und Breite) im Mikrometerbereich liegen (z.B. 20 µm). Man spricht daher in dieser Hinsicht auch von Mikrostrukturtechnik. Bei derartigen Wärmetauschaggregaten lassen sich beispielsweise spezifische Oberflächen im Bereich von 20.000 - 40.000 m²/m³ erzielen.

Ausgehend vom genannten Stand der Technik liegt der vorliegenden Erfindung die Aufgabe zugrunde, ein verbessertes Brennstoffzellensystem bereitzustellen, bei dem die Wasserversorgung der Brennstoffzellen auf einfache und Bauraum sparende Weise gewährleistet werden kann.

Durch die vorliegende Erfindung wird ein Brennstoffzellensystem bereitgestellt, mit mindestens einer Brennstoffzelle, die wenigstens eine Zuleitung und eine Ableitung für einen Brennstoff sowie wenigstens eine Zuleitung und eine Ableitung für ein Oxidationsmittel aufweist. Das Brennstoffzellensystem ist erfindungsgemäß dadurch gekennzeichnet, daß in der Ableitung für den Brennstoff und/oder in der Ableitung für das Oxidationsmittel eine Vorrichtung zum Auskondensieren von Wasser angeordnet ist.

Diese Vorrichtung zum Auskondensieren von Wasser aus dem Abgasstrom der Brennstoffzellenweist wenigstens ein erstes Kondensatorelement mit zumindest einem Strömungsweg für den Gasstrom und wenigstens ein zweites Kondensatorelement mit zumindest einem Strömungsweg für ein Kühlmedium auf. Dabei sind die Kondensatorelemente derart benachbart zueinander angeordnet, daß ein thermischer Austausch zwischen dem die Strömungswege durchströmenden Gasstrom und dem Kühlmedium stattfindet oder stattfinden kann. Wesentliches Kennzeichen ist es, daß die Kondensatorelemente in Mikrostrukturtechnik ausgebildet sind. Unter Mikrostrukturtechnik werden in diesem Zusammenhang insbesondere Strukturen von Wärmetauschern verstanden, deren Strömungskanäle charakteristische Querschnittsabmessungen (z.B. Breite, Höhe, Durchmesser) und/oder Wanddicken im wesentlichen im Mikrometerbereich, also im Bereich kleiner Bruchteile eines Millimeters aufweisen (z.B. unter 200 µm, insbesondere im Bereich 10-100 µm).

Durch die erfindungsgemäß vorgesehene Kondensationsvorrichtung kann auf einfache und platzsparende Weise Wasser, das sich im dampfförmigen Zustand im Abgasstrom befindet, zurückgewonnen werden. Die vorliegende Erfindung sieht vor, daß durch den Strömungsweg des ersten Kondensatorelements der Abgasstrom geleitet wird, der in dampfförmigem Zustand das zu kondensierende Wasser enthält. Durch den Strömungsweg des zweiten Kondensatorelements wird ein geeignetes Kühlmedium geleitet. Da die beiden Kondensatorelemente derart benachbart zueinander angeordnet sind, daß ein thermischer Austausch zwischen dem Abgasstrom und dem Kühlmedium stattfinden kann, wird der Abgasstrom durch das Kühlmedium abgekühlt, was ein Auskondensieren des Wassers aus dem Abgasstrom bewirkt. Das auskondensierte Wasser kann weiter verwertet werden. Durch die Ausführung der Kondensatorelemente in Mikrostrukturtechnik wird auf kleinstem Raum eine außerordentlich hohe Wärmetauschleistung gewährleistet.

Durch das erfindungsgemäße Brennstoffzellensystem wird es möglich, das bei der Erzeugung von Strom in der Brennstoffzelle erzeugte und mit dem Brennstoffzellenabgas ausgetragene Produktwasser zu gewinnen und in den flüssigen Zustand zu überführen, so daß das Wasser anschließend zur Befeuchtung der Brennstoffzellenmembran und für weitere Prozesse im Umgebungsbereich der Brennstoffzelle, beispielsweise bei der Aufbereitung und/oder Erzeugung des Brennstoffs für die Brennstoffzelle oder dergleichen, genutzt werden kann.

Die Vorrichtung zum Auskondensieren von Flüssigkeit kann in der Ableitung für das Oxidationsmittel oder in der Ableitung für den Brennstoffoder auch in beiden Ableitungen vorgesehen sein. Sie ist insbesondere immer dort von Vorteil, wo sich im Abgasstrom sehr viel Wasser in Form von Wasserdampf befindet. Allerdings muß gewährleistet werden, daß bei der Gewinnung von Wasser aus dem Abgasstrom keine schädlichen Bestandteile, die die Brennstoffzelle oder andere Elemente des Brennstoffzellensystems beschädigen könnten, mit ausgetragen werden. In vorteilhafter Ausgestaltung ist die Vorrichtung zum Auskondensieren von Flüssigkeit deshalb in der Ableitung für das Oxidationsmittel angeordnet, insbesondere dann, wenn als Oxidationsmittel reiner Sauerstoff verwendet wird.

Bevorzugte Ausführungsformen des Brennstoffzellensystems ergeben sich aus den Unteransprüchen.

Vorteilhaft ist die Vorrichtung zum Auskondensieren von Flüssigkeit mit einer Anordnung zum Aufbereiten und/oder Erzeugen des Brennstoffs und/oder des Oxidationsmittels verbunden. Dadurch wird zum einen die Erzeugung beziehungsweise die Aufbereitung des Brennstoffs und/oder des Oxidationsmittels erheblich verbilligt, denn besondere Wasserspeicher für einen größeren Wasservorrat und Wasserzuleitungen, die bisher erforderlich waren, können nunmehr entfallen. Da in der Brennstoffzelle in der Regel mehr Wasser produziert wird, als bei der Produktion des Brennstoffs, etwa von Wasserstoff durch eine Dampfreformierung beziehungsweise durch eine Shift-Reaktion, benötigt wird, kann auf zusätzliche Wasserquellen gänzlich verzichtet werden. Dadurch wird weiterhin auch der konstruktive Aufwand für die Anordnung zum Aufbereiten und/oder Erzeugen von Brennstoff und damit für das gesamte Brennstoffzellensystem reduziert.

Vorteilhaft ist die Vorrichtung zum Auskondensieren von Wasser mit einem Flüssigkeitsspeicher verbunden. Auf diese Weise kann das aus dem Abgasstrom der Brennstoffzelle gewonnene Wasser auch anderen Elementen des Brennstoffzellensystems zur Verfügung gestellt werden.

Für die Verwendung in Brennstoffzellen ist es sehr vorteilhaft, daß die Vorrichtung zum Auskondensieren von Wasser in Mikrostrukturtechnik ausgebildet ist. Dadurch kann die Vorrichtung zum einen besonders kompakt ausgebildet werden. Weiterhin wird durch die Aüsgestaltung der Vorrichtung in Mikrostrukturtechnik eine kostensparende Massenproduktion möglich. Von ganz besonderem Vorteil ist es bei der Ausbildung der Vorrichtung, beziehungsweise von deren Bauelementen in Mikrostrukturtechnik, daß außerordentlich hohe Wärmeübergangskoeffizienten gewährleistet werden können.

Vorteilhaft werden mehrere Kondensatorelemente für den Abgasstrom und mehrere Kondensatorelemente für das Kuhlmedium vorgesehen. Dabei sind die einzelnen Kondensatorelemente vorteilhaft jeweils abwechselnd benachbart zueinander angeordnet. Dadurch kann die Vorrichtung modulweise in beliebiger Leistungsgröße gebaut werden. Damit wird eine individuelle Anpassung der Vorrichtung an die jeweils je Zeiteinheit auszukondensierende Flüssigkeitsmenge möglich.

In vorteilhafter Ausgestaltung kann die Vorrichtung zum Auskondensieren von Wasser eine "sandwichartige" Struktur aufweisen. In diesem Fall ist jeweils ein Kondensatorelement, das den zumindest einen Strömungsweg für den Abgasstrom aufweist, von jeweils zwei Kondensatorelementen umgeben, die den zumindest einen Strömungsweg für das Kühlmedium aufweisen. Auf diese Weise wird die Abkühlung des Abgasstroms und damit das Auskondensieren von Flüssigkeit weiter verbessert.

Regelmäßig ist der zumindest eine Strömungsweg für den Gasstrom räumlich getrennt von dem zumindest einen Strömungsweg für das Kühlmedium ausgebildet. Dadurch kommen der Gasstrom und das Kühlmedium nicht direkt in Berührung, so daß eventuell schädliche Reaktionen zwischen den beiden Medien verhindert werden.

Üblicherweise weist das erste Kondensatorelement eine Vielzahl von Strömungswegen für den Gasstrom auf. Entsprechend ist auch das zweite Kondensatorelement zweckmäßig mit einer Vielzahl von Strömungswegen für das Kühlmedium versehen. Über die Anzahl der Strömungswege kann die Kondensierungsrate von Flüssigkeit aus dem Gasstrom, also die Leistungsgröße des Kondensators eingestellt werden.

Vorteilhaft können die Strömungswege als Strömungskanäle oder Strömungsleitungen, insbesondere als Mikrokanäle oder Mikroleitungen, ausgebildet sein.

Hierbei können die einzelnen Strömungswege in ihrem Querschnitt polygonal (z.B: rechteckig oder quadratisch ausgebildet sein, so daß sie zumindest in Teilbereichen mit ihren Seitenwänden direkt flächig aneinander liegen und der Wärmeaustausch über diese aneinander liegenden Seitenwände erfolgt. Es ist jedoch auch denkbar, daß die Strömungswege einen runden oder im wesentlich kreisförmigen Querschnitt aufweisen. In diesem Fall sind die einzelnen Strömungswege derart benachbart zueinander angeordnet, daß zur Gewährleistung des thermischen Austauschs entsprechende wärmeleitfähige Materialien in den Zwischenräumen zwischen den benachbarten Strömungswegen vorgesehen sind, über die der Wärmeaustausch erfolgt.

Insbesondere, wenn die Strömungswege als Strömungskanäle ausgebildet sind, können diese Strömungskanäle als im wesentlichen offene Nut innerhalb eines Kondensatorelements ausgebildet sein. Die Abdichtung und Abdeckung der offenen Nut des Strömungswegs erfolgt dann über das jeweils unmittelbar benachbart anliegende Kondensatorelement und bei dem ganz außen liegenden Kondensatorelement bei Bedarf durch einen einfachen ebenen Deckel.

Vorzugsweise können die Kondensatorelemente eine plattenartige Grundform aufweisen.

Auf diese Weise ist eine kompakte Bauweise der Kondensatorelemente und damit der Vorrichtung zum Auskondensieren von Wasser möglich. Diese kompakte Bauweise ermöglicht eine sehr dynamische Prozeßführung, was für den Einsatz der Vorrichtung in einem Brennstoffzellensystem von besonderer Bedeutung ist. Weiterhin ist die Herstellung derartiger Kondensatorelemente sehr einfach und kostengünstig in Serie durchführbar.

In vorteilhafter Ausgestaltung weisen die Kondensatorelemente jeweils einen plattenartigen Grundkörper auf, auf oder in dem die einzelnen Strömungswege ausgebildet sind. Insbesondere, wenn die Strömungswege als offene Strömungskanäle ausgebildet sind, können diese durch entsprechende Elemente für die Längswände der Kanäle gebildet werden, die mit der ebenen Oberfläche des plattenartigen Grundkörpers des Kondensatorelements verbunden sind und von dessen Oberfläche vorzugsweise im wesentlichen senkrecht abstehen. Dabei können die Wandelemente und der plattenartige Grundkörper entweder über ein entsprechendes Fügeverfahren miteinander verbunden werden, oder aber auch einstückig ausgebildet sein. Insbesondere im letztgenannten Fall kann das Kondensatorelement auf sehr einfache Weise hergestellt werden, beispielsweise durch ein entsprechendes Preß- oder Gußverfahren.

Zur Ausbildung der Vorrichtung zum Auskondensieren von Wasser werden die einzelnen plattenartigen Kondensatorelemente anschließend derart zusammengebaut, daß die ebene Unterseite des plattenartigen Grundkörpers eines Kondensatorelements die offenen Strömungskanäle des jeweils benachbarten Kondensatorelements schließt und entsprechend abdichtet. Auf diese Weise wird eine sehr kompakte und Platz sparende Variante der erfindungsgemäß vorgesehenen Vorrichtung zum Auskondensieren von Wasser geschaffen.

In weiterer Ausgestaltung können die Strömungswege über ihre Längsausdehnung mehrere Bereiche mit unterschiedlichem Querschnitt aufweisen. Dadurch kann insbesondere in den Strömungswegen für den Abgasstrom ein Ableiten desauskondensierten Wassers erleichtert werden. Werden die Strömungswege beispielsweise zum Ende hin weiter, läßt sich verhindern, daß Wassertropfen durch die Oberflächenspannung (Kapillarwirkung) in den Strömungswegen gehalten werden. Je nach Bedarf und Anwendungsfall können die Querschnitte der Strömungswege hinsichtlich Form und Größe individuell ausgestaltet sein.

Vorzugsweise sind das Kondensatorelement für den Gasstrom und das Kondensatorelement für das Kühlmedium derart benachbart zueinander angeordnet, daß die Längsrichtung der Strömungswege jeweils winklig, vorzugsweise in einem Winkel von 90° zueinander ausgerichtet sind. Dadurch ergibt sich eine Prozeßführung im Kreuzstrom, bei der das Auskondensieren genau gesteuert werden kann.

In einer vorteilhaften Ausgestaltungsform ist beispielsweise das Kondensatorelement, das den oder die Strömungswege für den Abgasstrom aufweist, derart ausgebildet, daß der oder die Strömungswege in Einbaulage vertikal, d.h. parallel zur Gravitationsrichtung, ausgerichtet sind. Vorzugsweise wird der Abgasstrom von oben nach unten durch die Strömungswege geführt. Dadurch wird gewährleistet, daß die auskondensierten Wassertropfen den Strömungsweg verlassen können. Zum einen wird dies erreicht, indem die Gravitation ausgenutzt wird. Weiterhin unterstützt auch der Abgasstrom, aus dem das Wasser auskondensiert wird, das Austragen des Kondensats. Durch die Gasgeschwindigkeit werden die auskondensierten Wassertropfen aus den Strömungswegen geschleudert.

In weiterer Ausgestaltung kann die Strömungsrichtung des den Strömungsweg durchströmenden Abgasstroms entgegengesetzt zur Strömungsrichtung des den Strömungsweg durchströmenden Kühlmediums eingestellt oder einstellbar sein, In diesem Fall können das Kühlmedium und der Abgasstrom im Gegenstrom geführt werden. Dabei sind die Längsrichtungen der Strömungswege für den Gasstrom und das Kühlmedium parallel zueinander benachbart angeordnet. Vorzugsweise wird der Gasstrom von oben nach unten geleitet, während das Kühlmedium von unten nach oben geleitet wird. Das bedeutet, daß das Kühlmedium im Endbereich des Gasstroms am kältesten ist. An dieser Stelle wird somit die meiste Flüssigkeit auskondensiert. Das auskondensierte Wasser kann dann auf einfache Weise aus der Vorrichtung zum Auskondensieren abgeleitet werden.

In weiterer Ausgestaltung können die Strömungswege an ihren Innenoberflächen zumindest bereichsweise eine flüssigkeitsabweisende Beschichtung aufweisen. Dadurch wird die Kondensationswirkung der Vorrichtung weiter verbessert. Durch die flüssigkeitsabweisende Beschichtung wird eine Benetzung der Innenoberflächen der Strömungswege mit Flüssigkeit verhindert. Die Flüssigkeitstropfen können daher leichter ausgetragen werden.

Vorzugsweise sind die Kondensatorelemente und/oder die Strömungswege aus einem gut wärmeleitenden Material gebildet. Dadurch wird der Wärmeaustausch zwischen dem Abgasstrom und dem Kühlmedium und damit der Wärmeübergang weiter verbessert. Geeignete Materialien sind beispielsweise - jedoch nicht ausschließlich - Kupfer, Silizium oder dergleichen. Wegen der strukturbedingten kleinen Wanddicken zwischen den beiden wärmetauschenden Medien sind die Wärmefließwege sehr kurz. Daher lassen sich auch bei vergleichsweise schlecht wärmeleitenden Materialien für die Kondensatorelemente trotzdem noch sehr hohe Wärmeübertragungsleistungen und somit sehr gute Kondensatorleistungen erzielen.

Besonders vorteilhaft wird das vorstehend beschriebene erfindungsgemäße Brennstoffzellensystem mit Vorrichtung zum Gewinnen von Wasser aus einer Brennstoffzelle für ein Fahrzeug verwendet.

Auf Grund der rasanten Entwicklung in der Brennstoffzellentechnologie im Fahrzeugsektor bietet die Verwendung von Brennstoffzellen auf diesem Gebiet besonders gute Einsatzmöglichkeiten. Dennoch sind auch andere Einsatzmöglichkeiten denkbar. Zu nennen sind hier beispielsweise Brennstoffzellen für mobile Geräte wie Computer oder mobile Telefone und für stationäre Anwendungen etwa in Kraftwerksanlagen. Auch eignet sich die Brennstoffzellentechnik für die dezentrale Energieversorgung von Häusern, Industrieanlagen oder dergleichen.

In bevorzugter Weise wird die vorliegende Erfindung in Verbindung mit Brennstoffzellen mit Polymermembranen (PEM) verwendet. Diese Brennstoffzellen haben einen hohen elektrischen Wirkungsgrad, verursachen nur minimale Emissionen, weisen ein optimales Teillastverhalten auf und sind im wesentlichen frei von mechanischem Verschleiß.

Als Brennstoff für die Brennstoffzellen kann beispielsweise, jedoch nicht ausschließlich, aus Methanol, Benzin, Methan, Erdgas, Kohlegas, Biogas oder dergleichen gewonnener Wasserstoff verwendet werden.

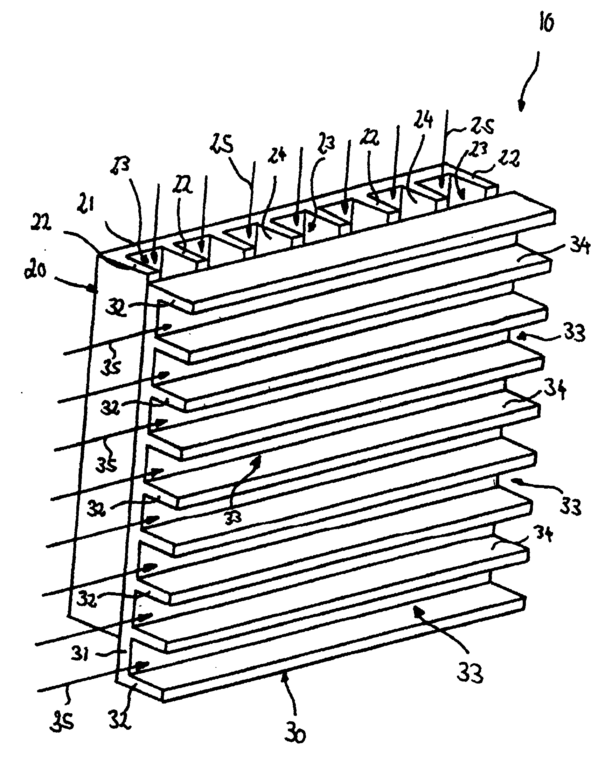

Die Erfindung wird nun auf exemplarische Weise an Hand eines Ausführungsbeispiels unter Bezugnahme auf die beiliegende Zeichnung näher erläutert. Es zeigt die einzige Figur in schematischer perspektivischer Ansicht ausschnittsweise eine erfindungsgemäß vorgesehene Vorrichtung zum Auskondensieren von Wasser aus einem Abgasstrom.

In der Figur ist eine Vorrichtung 10 dargestellt, die zum Auskondensieren von Wasser aus dem Abgasstrom einer nicht dargestellten Brennstoffzelle für ein Fahrzeug verwendet werden soll.

Die Vorrichtung 10 zum Auskondensieren von Wasser weist ein erstes Kondensatorelement 20 und ein zweites Kondensatorelement 30 auf, wobei die Kondensatorelemente 20, 30 jeweils in Mikrostrukturtechnik ausgebildet sind.

Das erste Kondensatorelement 20 in Mikrostrukturtechnik weist eine plattenartige Grundform auf. Dazu ist eine Basisplatte 21 vorgesehen, auf der eine Anzahl von Strömungswegen 23 ausgebildet ist. Die Strömungswege 23 werden durch entsprechende Seitenwandelemente 22 gebildet, die mit der Basisplatte 21 verbunden sind und von dieser im wesentlichen senkrecht abstehen. Im vorliegenden Fall sind die Wandelemente 22 und die Basisplatte 21 einstückig miteinander verbunden. Die Basisplatte 21 und die Wandelemente 22 bestehen aus einem gut wärmeleitenden Material, beispielsweise Kupfer oder Silizium.

Die Strömungswege 23 sind als offene Mikro-Strömungskanäle ausgebildet. Die Strömungskanäle weisen eine im wesentlichen nutförmige Konfiguration auf, wobei jeweils drei Seitenwände durch die Wandelemente 22 und die Basisplatte 21 gebildet werden.

Das erste Kondensatorelement 20 ist derart ausgerichtet, daß sich die Strömungswege 23 von oben nach unten, d.h. parallel zur Gravitationsrichtung, erstrecken. Ein in Strömungsrichtung 25 durch die Strömungswege 23 geleiteter Gasstrom strömt deshalb von oben nach unten durch die Strömungswege 23, wie dies durch die entsprechenden Pfeile dargestellt ist.

Das weiterhin vorgesehene zweite Kondensatorelement 30 in Mikrostrukturtechnik weist ebenfalls eine plattenartige Grundform auf und ist aus einer Basisplatte 31 sowie Seitenwandelementen 32 gebildet. Dabei entspricht die konstruktive Ausgestaltung des zweiten Kondensatorelements 30 derjenigen des ersten Kondensatorelements 20. Die im zweiten Kondensatorelement 30 ausgebildeten Strömungswege 33 werden ebenfalls jeweils durch die Wandelemente 32 und die Basisplatte 31 gebildet, wobei die Strömungswege 33 ebenfalls in Form eines offenen Mikro- Strömungskanals ausgebildet sind.

Bei Betrieb der Vorrichtung 10 zum Auskondensieren von Wasser wird durch die Strömungswege 33 des zweiten Kondensatorelements 30 ein geeignetes Kühlmedium hindurchgeleitet.

Das erste Kondensatorelement 20 und das zweite Kondensatorelement 30 sind derart miteinander verbunden, daß eine "sandwichartige" Struktur der Vorrichtung 10 zum Auskondensieren von Wasser entsteht. Dadurch wird eine kompakte und sehr Platz sparende Ausgestaltung der Vorrichtung 10 ermöglicht. Die Basisplatte 31 des zweiten Kondensatorelements 30 liegt dabei derart auf den Wandelementen 22 des ersten Kondensatorelements 20 auf, daß die bisher offenen Strömungswege 23 des ersten Kondensatorelements 20 durch die Basisplatte 31 des zweiten Kondensatorelements 30 geschlossen und abgedichtet werden. Durch diese Ausgestaltung wird ein thermischer Austausch zwischen dem die Strömungswege 23 durchströmenden Gasstroms und dem die Strömungswege 33 durchströmenden Kühlmediums ermöglicht. Die offenen Strömungswege 33 können durch eine nicht dargestellte glatte Platte oder durch ein weiteres Kondensatorelement abgedeckt werden.

Je nach Bedarf kann die Vorrichtung 10 jeweils mehr als ein Kondensatorelement 20 beziehungsweise 30 aufweisen. In diesem Fall wird jeweils ein Kondensatorelement 20 für den Abgasstrom von jeweils zwei Kondensatorelementen 30 für das Kühlmedium flankiert. Dadurch wird der Wärmeübergang weiter verbessert.

Die Innenoberflächen 24, 34 der Strömungswege 23, 33 können mit einem geeigneten wasserabweisenden Material beschichtet sein. Dadurch wird die Ableitung des in den Strömungswegen 23 auskondensierten Wassers weiter verbessert. Ebenso können insbesondere die Strömungswege 23 über ihre Langsausdehnung Bereiche mit unterschiedlichem Querschnitt aufweisen. So ist insbesondere denkbar, daß sich die Strömungswege 23 in ihrem Endbereich, d.h. kurz vor dem Austritt des auskondensierten Wassers aus der Vorrichtung 10, erweitern, wodurch der Austrag des Wassers weiter verbessert wird.

Im vorliegenden Ausführungsbeispiel sind die Kondensatorelemente 20 und 30 derart benachbart zueinander angeordnet, daß die Strömungswege 23, 33 in einem Winkel von 90° zueinander ausgerichtet sind. Das Durchströmen der Strömungswege 23, 33 mit dem Abgasstrom beziehungsweise dem Kühlmedium erfolgt somit nach dem Kreuzstromprinzip.

Nachfolgend wird nun die Funktionsweise der erfindungsgemäßen Vorrichtung 10 zum Auskondensieren von Wasser aus dem Abgasstrom einer Brennstoffzelle beschrieben.

Wenn die Vorrichtung 10 zum Auskondensieren beispielsweise in der Ableitung für das Oxidationsmittel aus der Brennstoffzelle angeordnet ist, wird der in der Ableitung für das Oxidationsmittel befindliche heiße Abgasstrom aus der Brennstoffzelle durch die Strömungswege 23 des ersten Kondensatorelements 20 hindurch geleitet. Dies erfolgt in der durch die entsprechenden Pfeile dargestellten Strömungsrichtung 25, d.h. im vorliegenden Ausführungsbeispiel parallel zur Gravitationsrichtung von oben nach unten.

Gleichzeitig wird durch die Strömungswege 33 des zweiten Kondensatorelements 30 ein geeignetes Kühlmedium hindurchgeleitet. Das Kühlmedium strömt dabei in der durch die entsprechenden Pfeile dargestellten Strömungsrichtung 35. Durch diese Medienführung nach dem Kreuzstromprinzip bewirkt das Kühlmedium eine Abkühlung des Abgasstroms und somit ein Auskondensieren des wasserdampfreichen Brennstoffzellenabgases. Der Wasserdampf kondensiert in den Strömungswegen 23 und bildet dort Wassertropfen. Auf Grund der Gravitationswirkung bewegen sich die gebildeten Wassertropfen nach unten in Richtung des Ausgangs der Vorrichtung 10. Gleichzeitig wird das Austragen des auskondensierten Wassers durch den Abgasstrom unterstützt, da durch die Gasgeschwindigkeit die gebildeten Wassertropfen aus den Strömungswegen 23 geschleudert werden. Das auskondensierte Wasser kann in geeigneten Behältern aufgefangen und zur anderweitigen Verwendung abgeleitet werden.

Durch die konstruktive Ausgestaltung der Vorrichtung 10 zum Auskondensieren von Wasser wird eine sehr kompakte Bauweise und eine sehr dynamische Prozeßführung ermöglicht, was insbesondere für den mobilen Einsatz eines Brennstoffzellensystems sehr wichtig ist.

### Bezugszeichenliste

- 10: = Vorrichtung zum Auskondensieren von Wasser
- 20: = erstes Kondensatorelement
- 21: = Basisplatte
- 22: = Wandelement
- 23: = Strömungsweg
- 24: = Innenoberfläche
- 25: = Strömungsrichtung des Abgasstroms
- 30: = zweites Kondensatorelement
- 31: = Basisplatte
- 32: = Wandelement
- 33: = Strömungsweg
- 34: = Innenoberfläche
- 35: = Strömungsrichtung des Kühlmediums

## Patentansprüche

1. Brennstoffzellensystem mit mindestens einer Brennstoffzelle, das wenigstens eine Zuleitung und eine Ableitung für einen Brennstoff sowie wenigstens eine Zuleitung und eine Ableitung für ein Oxidationsmittel aufweist,
dadurch gekennzeichnet,
daß in der Abgasableitung für den Brennstoff und/oder in der Abgasableitung für das Oxidationsmittel eine Vorrichtung (10) angeordnet ist zum Auskondensieren von Wasser aus dem Abgasstrom der Brennstoffzelle, mit wenigstens einem ersten Kondensatorelement (20), das zumindest einen Strömungsweg (23) für den Abgasstrom aufweist, und mit wenigstens einem zweiten Kondensatorelement (30), das zumindest einen Strömungsweg (33) für ein Kühlmedium aufweist, wobei die Kondensatorelemente (20, 30) derart benachbart zueinander angeordnet sind, daß ein thermischer Austausch zwischen dem die Strömungswege (23, 33) durchströmenden Abgasstrom und dem Kühlmedium stattfindet oder stattfinden kann und wobei das wenigstens eine erste Kondensatorelement (20) und das wenigstens eine zweite Kondensatorelement (30) in Mikrostrukturtechnik ausgebildet sind.

2. Brennstoffzellensystem nach Anspruch 1,
dadurch gekennzeichnet,
daß die Vorrichtung (10) zum Auskondensieren von Wasser mit einer Anordnung zum Aufbereiten und/oder Erzeugen des Brennstoffs und/oder des Oxidationsmittels verbunden ist.

3. Brennstoffzellensystem nach Anspruch 1 oder 2,
dadurch gekennzeichnet,
daß die Vorrichtung (10) zum Auskondensieren von Wasser mit einem Flüssigkeitsspeicher verbunden ist.

4. Brennstoffzellensystem nach einem der Ansprüche 1 bis 3,
dadurch gekennzeichnet,
daß mehrere Kondensatorelemente (20) für den Abgasstrom und mehrere Kondensatorelemente (30) für das Kühlmedium vorgesehen sind, und daß die einzelnen Kondensatorelemente (20, 30) jeweils abwechselnd benachbart zueinander angeordnet sind.

5. Brennstoffzellensystem nach einem der Ansprüche 1 bis 4,
dadurch gekennzeichnet,
daß das Kondensatorelement (20) eine Vielzahl von Strömungswegen (23) für den Abgasstrom aufweist und/oder daß das Kondensatorelement (30) eine Vielzahl von Strömungswegen (33) für das Kühlmedium aufweist.

6. Brennstoffzellensystem nach einem der Ansprüche 1 bis 5,
dadurch gekennzeichnet,
daß die Strömungswege (23, 33) als Mikrokanäle oder Mikrorohrleitungen ausgebildet sind.

7. Brennstoffzellensystem nach einem der Ansprüche 1 bis 6,
dadurch gekennzeichnet,
daß die Kondensatorelemente (20, 30) eine plattenartige Struktur aufweisen.

8. Brennstoffzellensystem nach einem der Ansprüche 1 bis 7,
dadurch gekennzeichnet,
daß die Strömungswege (23, 33) über ihre Längsausdehnung Bereiche mit unterschiedlichem Querschnitt aufweisen.

9. Brennstoffzellensystem nach einem der Ansprüche 1 bis 8,
dadurch gekennzeichnet,
daß das Kondensatorelement (20) für den Abgasstrom und das Kondensatorelement (30) für das Kühlmedium derart benachbart zueinander angeordnet sind, daß die Strömungswege (23, 33) jeweils winklig, vorzugsweise in einem Winkel von 90°, zueinander ausgerichtet sind.

10. Brennstoffzellensystem nach einem der Ansprüche 1 bis 9,
dadurch gekennzeichnet,
daß die Strömungsrichtung des den Strömungsweg (23) durchströmenden Abgasstroms entgegengesetzt zur Strömungsrichtung des den Strömungsweg (33) durchströmenden Kühlmediums eingestellt oder einstellbar ist.

11. Brennstoffzellensystem nach einem der Ansprüche 1 bis 10,
dadurch gekennzeichnet,
daß die Strömungswege (23, 33) an ihren Innenoberflächen (24, 34) zumindest bereichsweise eine flüssigkeitsabweisende Beschichtung aufweisen.

12. Verwendung eines Brennstoffzellensystems nach einem der Ansprüche 1 bis 11 in einem Fahrzeug.
